# EUROPEAN PATENT APPLICATION

(11) **EP 3 225 518 A1**
(43) Date of publication of application: **04.10.2017**
(21) Application number: 16000748.0
(22) Date of filing: 31.03.2016
(51) Int. Cl.: B62J 1/08

(54) **SEATING GROUP FOR A BIKE AND BIKE COMPRISING SUCH AN ASSEMBLY**

(71) Applicant: Ferrero, Franco, 10147 Torino (IT)
(72) Inventor: Ferrero, Franco, 10147 Torino (IT)

(57) **Abstract**

A seating assembly for a bicycle comprising: a saddle (10) having a first seating portion (10a) and a second seating portion (10b); a link module (30) having a fixing portion to make said module (30) integral with the frame of a bicycle and a supporting portion configured to support said saddle (10); an link interface (20) to fix said saddle (10) to said supporting portion; wherein said first seating portion (10a) and said second seating portion (10b) are selectively fixable to said link interface (20) for varying the distance between said seating portions (10a, 10b) to determine on the basis of the chosen fixing, the seating surface that said saddle (10) offers to a user.

## Description

### FIELD OF THE INVENTION

The present invention relates to a saddle, in particular for a bike, and the related linking system to the frame of such a bicycle.

### BACKGROUND ART

The saddle of a bicycle bears most of the weight of the user sitting on this. The part of the user's body in direct contact with the saddle is reduced, or much reduced, and is, typically, the ischial tuberosities of the area and the perineal area of these. Moreover, the contact between the support and the saddle areas is of the dynamic type, the contact surface varies continuously, albeit slightly, because the user pedals rotating the legs, and consequently tends to move the "line" of the basin and the ischial tuberosity. Given that the support on the extended seat of the ischial tuberosity area is what usually does not generate negative consequences from a clinical point of view if soreness then disappear normally with the adaptation, while the perineal compression and pelvic area is in the anatomy men and uramen are involved in the support in addition to the complex structures bladder circulatory (blood vessels), muscle and nerve whose prolonged compression can create discomfort in addition to numerous diseases such as urethritis compression effects on the prostate, temporary numbness and up to serious consequences on erectile function for male users, and consequences of various type also for women, in this project has paid particular attention to distribute the load support in an optimal way, and above all easily customizable centering with an appropriate adjustment of the system structure of support in the area of the ischial tuberosities, which as said are located between them in a different way between each subject and can also oscillate in a subjective way.

This project stems from research to add possibility of not existing regulation and adjustment of the seat in the currently circulating achievements.

The posterior inferior part of the hip bone is characterized by two ischial tuberosity which, together with the high branch of the ischium, constitute the support for the body in said seating position. Under ideal conditions, the user is sitting on the saddle with most of the weight that rests on the ischial tuberosity and the highest branch of the ischium. However, the conditions of the terrain on which the bicycle is moving, and the cyclical nature of the pedal away from ideal conditions, and can determine after a period of activity more or less along the hassles or the above problems. In case of use of the bicycle also, the basin is more or less tilted forward and this involves precisely in the case of long use, a pressure increase position on the perineal area.

In response to these problems, as the industry has designed and developed two main product lines: saddles of different shape and size and special bottoms for the shorts. The saddles are trying to take up necessary support while pedaling, reduce friction by dynamic contact and optimize compression, especially the user's perineal area. The bottoms and shorts instead protect the tissues of the perineal area and increase comfort perceived by the user.

These solutions provide early certainly applicable level of protection; However, without the adoption of a specifically suitable shape saddle to the individual user, the results may be unsatisfactory. In fact, the anatomical features of the mentioned bone structures can be different even among individuals with very similar anthropometric characteristics. In other words, subjects of similar height and weight may have different sizes of the bony structures of relevance for the purposes of the sitting on the saddle, in particular the distance between the ischiatic tuberosities, and may have different driving styles and different degrees of lateral oscillation of the basin. Moreover, the conformation of the basin is significantly different between male subjects and female gender, not only for the width of the basin, which also depends on the body, but also for the difference in height / distance between the ischiatic tuberosities and the pubic bone between the two genders, thus determining the need to choose in a customized way the saddle seeking the seat best suited for each subject.

This project stems from research to add possibility of adaptation of existing non-sitting in the currently circulating achievements.

### SUMMARY

The Applicant has realized that the known solutions can not fully satisfy the users, and that the correct choice of the saddle in the absence of further adjustment becomes complex and need of tests on different types of shapes and sizes, although these are teorizzabili performing measurements for example of the distance between the ischial tuberosities or deriving a map of the pressure applied on the saddle. In the light of the mentioned problems we have paid particular attention to distribute the load support in an optimal way and above all easily customizable centering with a special adjustment system the support structure in the area of the ischial tuberosities, which as said are located between them in a different way between each subject and can also oscillate in a subjective way. Even small changes can lead to significant differences on the most suitable saddle to choose from. The saddles, however, are normally produced in series with a predefined shape, and are designed to a very large user base.

The producers achieve more than saddles models suitable to the anthropometric measurements of the users and the types of use or user. However, even a saddle specification can be undesirable in a user to whom it is intended.

Therefore, the main purpose of the present invention is to provide a group of sitting for a bicycle in a simple and economic can overcome the drawbacks of the known art.

A first specific object of the present invention is to provide a group of sitting for a bicycle adjustable in width according to the anthropometric characteristics of a user, in particular the distance between the ischial tuberosities.

A second specific object of the present invention is to provide a group session which provides a better comfort to a user who uses it by means of an improved absorption of the stresses of the supporting structure of the saddle, which is structured with the planar section, leaf spring, and it can be constructed with different rigidity according to the type of use (eg road or off-road) or for different weights of users.

A third specific object of the present invention is to provide a group of sitting on which to set adjustments, also from the point of view of lateral inclination to better adapt to the degrees of oscillation (subjective) of the user's pelvis.

The inventive idea according to the invention is a saddle-crafted to offer possibilities of adjustment which in practice allow to change the width and shape of the seat, thus avoiding to replace the whole of the saddle to research an ideal support.

The invention therefore has for object a group of sitting for a bicycle comprising:
a saddle that comprises a first portion of seat and a second seat portion;
a support portion configured to support said saddle and absorb stresses,
a link module that includes a fixing portion to make said module to the frame of said bicycle and allow adjustments in the horizontal direction and in inclination,
a connection interface for securing said seat to said support portion.

The first seat portion and the second seat portion are selectively attachable to said connecting interface to determine, from time to time on the basis of the selected fastening, the distance between the seats (the two symmetrical halves) that said saddle offers a user.

Further advantageous technical features of the present invention are described in the dependent claims.della presente invenzione sono descritte nelle rivendicazioni dipendenti.

### LIST OF DRAWINGS

Further characteristics and advantages of the present invention will become more clear from the following detailed description, given by way of example and not limiting, and illustrated in the accompanying figures in which:
- Figure 1 shows a side view of a group of session according to the present invention;
- Figure 2 shows a top view of a component of the seat assembly according to the present invention;
- Figure 3 shows an exploded view of some components of the seat assembly according to the present invention,
- Figure 4 shows a side view of some components of the seat assembly according to the present invention;

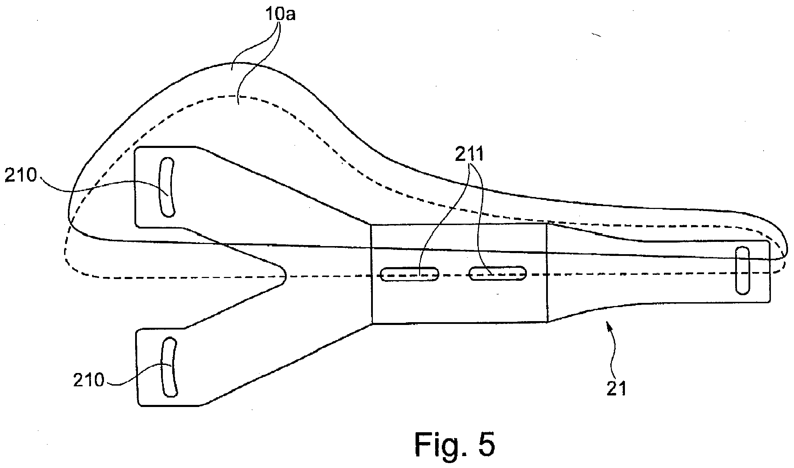

- Figure 5 shows a perspective view of some components of the seat assembly according to the present invention;
- Figure 6 illustrates a top view of some components of Figures 2 and 3.
- Figure 7 illustrates a top view of an alternative embodiment of some components of the seat assembly according to the present invention;
- Figure 8 illustrates a side view of the components of the embodiment relating to FIG 7, 6;
- Figure 9 shows a schematic top view of some components of the embodiment of Figures 6 and 7;
- Figure 10 illustrates the sequence of the sections of the component of Figure 2;
- Figure 11 shows the section of a detail of the seat group according to the present invention configured to provide additional lateral tilt adjustments;
- Figure 12 illustrates in section 11 to Further embodiments of some methods of adjustment of the seat group;
- Figure 13 illustrates a alternative embodiment of a group of session according to the present invention configured to fit in the traditional bicycle seat post tubes;
- Figure 14 illustrates a bottom view of the embodiment of Figure 13, 14;
- Figure 15 illustrates a perspective view of the embodiment of FIGS 14 13 and 12.

### DETAILED DESCRIPTIO

Both this description that these drawings are to be considered only for illustrative purposes and therefore do not limit; Therefore, the present invention can be implemented according to other and different embodiments; Furthermore, it should be noted that these figures are schematic and simplified.

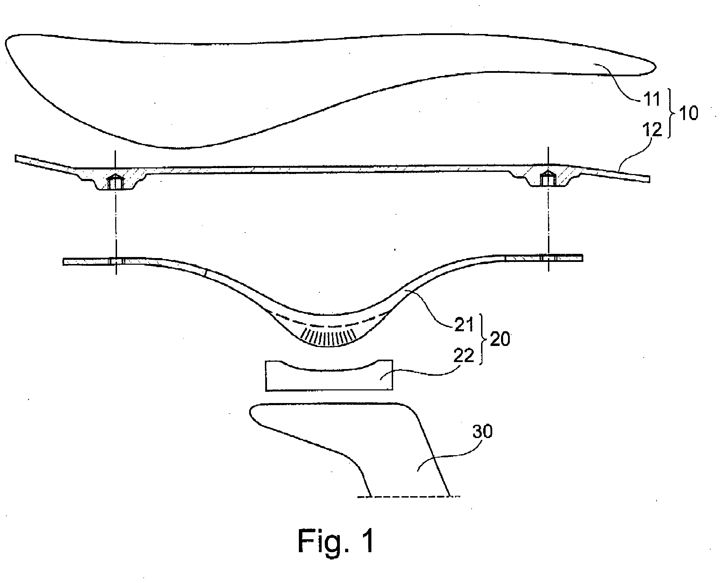

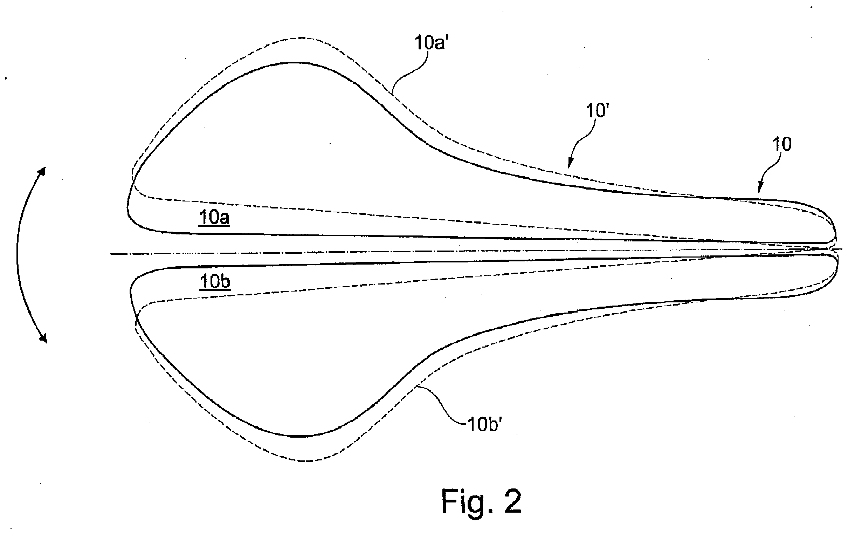

Figure 1 shows an embodiment of a group of session for a bicycle according to the present invention. This group includes:
- A saddle 10 in turn comprises a first portion 10a of the seat and a second portion 10b of the seat (Figure 2, in plan view); It said portions, respectively composed from parts of padding and cover 11a and 11b and 12a and 12b from the hulls, can indifferently be of varying shape and surface area and width according to the weight or sex of the user.
- A connection module 30, in turn comprising a fixing portion to make said module to the frame of said bicycle and a supporting portion 20 configured to support the seat 10;
- A connection interface 20 to fasten the seat 10 to the seat portion, and allow both the tilting of the support 21 in a clockwise-counterclockwise with respect to the observation side, and the support 22 to allow scrolling in the anteroposterior direction, in which the the first portion 10a of the seat and the second portion 10b (figure 2) of sitting are selectively attachable to said connecting interface 20 to determine, from time to time on the basis of the selected fastening, the distance between the same in order to adjust the width and "center" the best sitting surface that said saddle 10 provides to a user, for example according to the subjective distance between the ischiatic tuberosities, and the tilt to the side to better adapt the seat to the amplitude of the oscillation of the basin.

According to an embodiment of the first portion 10a of the seat and the second seat portion 10b are symmetric in shape. In other words two portions are specular to each other that in use define a single saddle. The module 30 for connection, also known in the art by the term "saddle", is destined to become integral with the frame of the bicycle by means of a fastening determined by the manufacturer of the frame, regardless of whether it is a round section and of any diameter or which has elliptical or at least different from the standard round.

In correspondence with a first end is defined a portion of the fixation of the module 30. Typically there are provided fastening means to be coupled to that portion and to the bicycle frame to make it so integral therewith. In particular, the fixing means coupling the portion 20 (comprising the sections 21 and 22) to the seat support 30, so to make it integral with the frame of the bicycle (not shown in the figures).

At the ends of the support 21, the support portions are defined configured to receive the saddle.

In use, a user typically piecewise pedaling seated on the saddle, and at times pedaling raised by this. The seating surface is that surface which provides the seat to a user, and is that the surface on which these rests when pedaling seated.

This surface usually comprises a substantially continuous area, defined in turn by a single entire surface or from a whole surface interspersed with portions of empty spaces (for example, a portion of the empty space defined by the discharge of the perineal area, or the space of the junction between the two portions of seat 10a and 10b).

As said, the first portion 10a of the seat and the second seat portion 10b are selectively fixable to the interface 20 of the connection to determine the distance between the same in function of the subjective distance between the ischial tuberosities of the user and properly compose the saddle 10 , this aspect will become clearer in the following, in particular with reference to figure 2.

As shown in Figure 1, according to an embodiment of the connecting frame is fixed to the second end of the module 30 is connected via a sliding element 22. The sliding element 22 is thus interposed between the connecting frame 21 and the seat support 30 , here exemplified in standard round section, but which may have other sections depending on the specifications of the manufacturer of the frame. The sliding element 22 allows to determine the retraction or advancement of the saddle 10, as described more in detail below, and in the coupling with the chassis leaf spring 20, the tilting of the sitting. Moreover, still in reference to Figure 1, the saddle 10 comprises a portion of padding 11 and a portion of the hull 12. Typically, the fixing of the saddle to the frame connecting occurs between the hull portion and the frame itself, while the portion of padding 11 It covers the portion of the hull. The portion of padding 11 is fixable to the hull portion 12 by methods known per se, for example by the use of fastening means, or by bonding, clamping or other type. Figure 2 shows how the seating surface is adjustable on the basis of the selected attachment. In particular there is shown a saddle 10 in a first operating condition, comprising two portions of seat 10a and 10b, illustrated in continuous line; and the same saddle 10 'in a second operating condition, in which the portions of seat 10a' and 10b 'have been fixed to offer a different surface of the seat

Preferably, the seat portions 10a and 10b are two distinct elements, in the first operating condition set so as to be symmetrical in shape and size with respect to the centerline. In the figure are set to the interface connection (not shown in Figure 2) so as to define a longitudinal space, in correspondence of the axis of the center line, which separates the first seat portion 10a and the second portion 10b of the seat.

In the second operating condition, the seat 10a 'and 10b' portions are still determined so as to be symmetrical in shape and size with respect to the centerline, however, are fixed at the interface of connection so as to be more spaced apart ( consequently space in the longitudinal axis of the center line matching increases), to define a major surface of seat offer to a consumer. It is therefore known that the bid form to a user by a saddle 10 according to the present invention is defined by the two portions of seat 10a and 10b (and 10a 'and 10b') and from the space separating these.

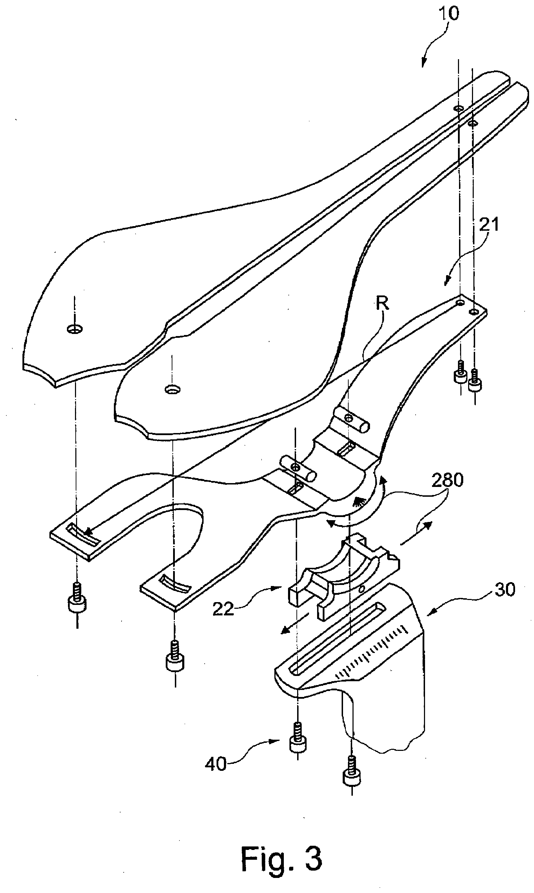

As seen in Figure 3, according to one preferred embodiment the connecting frame 21 includes a plurality of slots 210, 211 to which to apply fastening 40 (for example a screw means, a grain or similar elements) to fasten the first portion of seat and the second seat portion according to a plurality of configurations. Therefore, to provide a specific surface area of sitting, the two portions of seat 10a and 10b are fixed in two corresponding points of the slots 21a, 211. In order to offer a different seat portion, the two portions of seat 10a and 10b are fixed at other two corresponding points of the slots 210, 211. It 'can, however, achieve the same type of realization obtaining the slots 12a and 12b on elements obtaining the same purpose.

In figure 3 it is also possible to note an embodiment of a connecting frame 21. This frame has a form appropriate to receive in an appropriate way the two portions of seat 10a and 10b. Therefore preferably comprises a substantially elongated front tip portion, a central portion for coupling to the sliding element 22, a rear portion of dovetail, consists of two separate arms. The sliding element 22 has a corresponding central coupling portion on which the housing frame 21, configured for determining the planar tilt, that is the pitch angle, with which they will fix the frame 21. According to one embodiment, the head of the module 30 comprises a slit in which to fix the sliding element 22. It can in this way determine the longitudinal position of the sliding element mounting 22. It can thus determine the advancement or retraction of the saddle according to the requirements user.

According to one embodiment, a group of sitting for a bicycle according to the present invention therefore allows to:
- Determine the shape of the seat of the saddle 10 through the slots 210 defined on the frame 21 to which the two portions of seat 10a and 10b are fixed and allow to adjust the distance between the same. The system also allows the adoption of sizes and therefore different surfaces of the elements 10a and 10b, to optimize the distribution of the load as a function of the user's weight.
- Adjust the lateral inclination in order to better adapt the support surface for the users depending on the lateral oscillation of the basin.
- Determine the advancement or retraction of the saddle 10 by means of the sliding element 22, in particular via the fastening means of this engageable in the required seat formed on the head 30 of the module.
- Determining the planar tilt (the seat pitch) angle 10 through the central portion of the frame 21 coupled to the corresponding central portion of the element 22 sliding coupling.

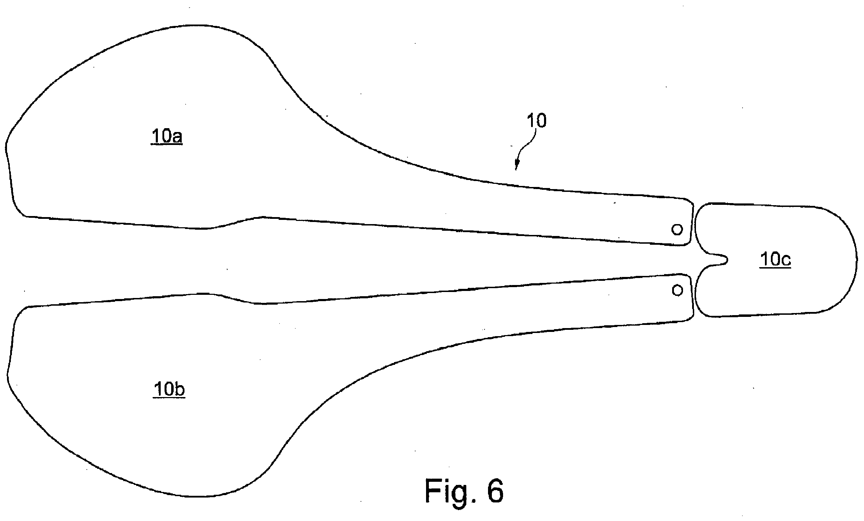

Also, as always visible in Figure 3, the slots of the rear portion are configured to facilitate the attachment of the seat portions 11 a and 11b: these in fact are fixed to the front holes and the slots of the posterior portion. The slots formed so that they have a general development in the circumference portion allow to choose the fixing position of the most suitable seat portion. The arrow R indicates a possible achievable control the front ends of the two semi-saddles are bound to holes in the regulation are spread apart the rear ends. In another embodiment of the front parts you can be placed also at a slot instead of holes, allowing also the gap in the front, as shown in Figure 6.

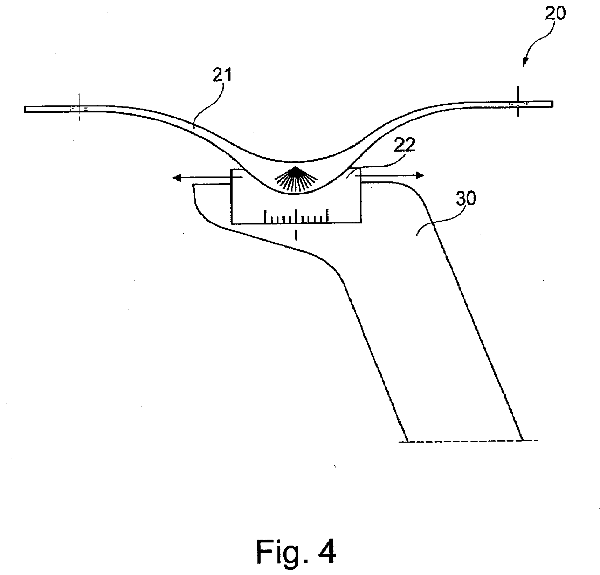

Figure 4 also shows a frame 21, a sliding element 22 and a connection module 30 in a mounted condition. It is noted that the head of the module 30 allows the sliding element 22 to be mounted second longitudinal configurations. The frame 21 may instead be mounted according to multiple configurations "planar", ie determine the pitch angle with which it is installed according to the requirements. According to one embodiment, the frame 21 there are provided indicating means for having knowledge of the angle of pitch with which you are mounting the frame 21 on the sliding element 22. Similarly means are provided to feed / retraction indication element slide 22 as shown in figure 4

According to one embodiment, the frame 21 is fabricated to provide a discharge opportunities for the saddle 10, and is able to withstand the flexing imposed by the force the user's weight. Advantageously, it is possible to provide areas with different structures capable of supporting the loads in a suitable way, who insist so very different on the frame 21, and to structure the same with different degrees of resistance as a function of the user's weight and the type of bicycle use. At the toe of the frame, the loads to be borne are normally reduced with respect to the central portion and the rear portion, and may be advantageous in that the matching structure of the tip of the saddle 10 allows a bending down of the same when the user, under certain driving conditions, move your weight forward and you are to weigh more on the tip of the saddle. In this way you get a reduction of pressure on the perineal area which in this way is more leaning forward with respect to the conditions of normal use.

In use, typically the majority of the user's weight force is concentrated on the central portion and the back portion.

Figure 6 shows atop view of the frame support 21 with the overlap of the seat portion 10a. As mentioned, the frame has a plurality of slots 210 which selectively fix the seat 10, in particular the hull 12. According to an embodiment of the hull 12 and the padding 11 are independent elements. In this sense, according to a first mode each seat portion 10a and 10b includes a hull 12a and 12b and 11a and 11b padding. According to this solution, therefore, the space between the two portions of the seat is accessible from the outside. According to a second mode, the hull includes the first and the second portion 12a and 12b as two distinct elements, while the padding 11, normally composed by padding covered with leather, fabric or the like, is a single element that covers both portions of the seat. In this way, the space between the two portions of the seat is covered, but the separation between the portions 11a and 11b remains, allowing the cover to be made of a material with the necessary elasticity to offer an obvious bending and thus reduce so decidedly considerable pressure in the central zone (perineal) while not presenting an empty area.

Figure 6 shows an alternative embodiment of a group of session according to the present invention in which at their ends by a portion 10c two portions 10a and 10b are provided completed.

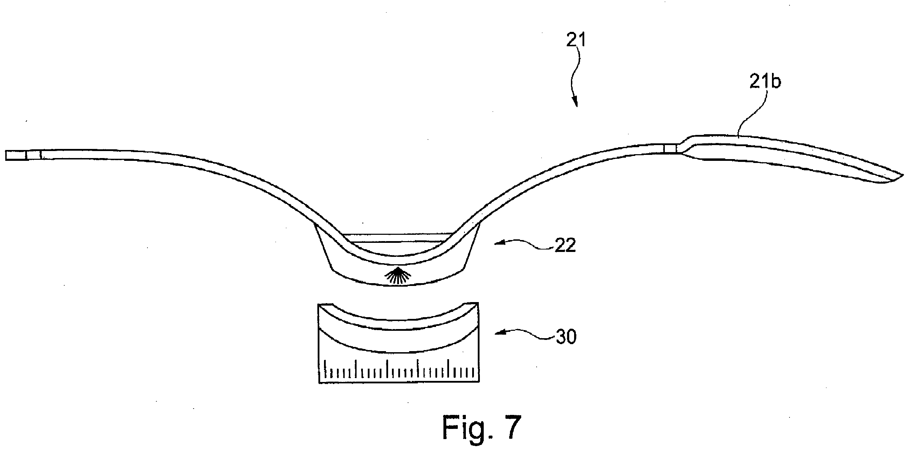

Figure 7 shows the side view of the embodiment of the support structure relative to Figure 6.

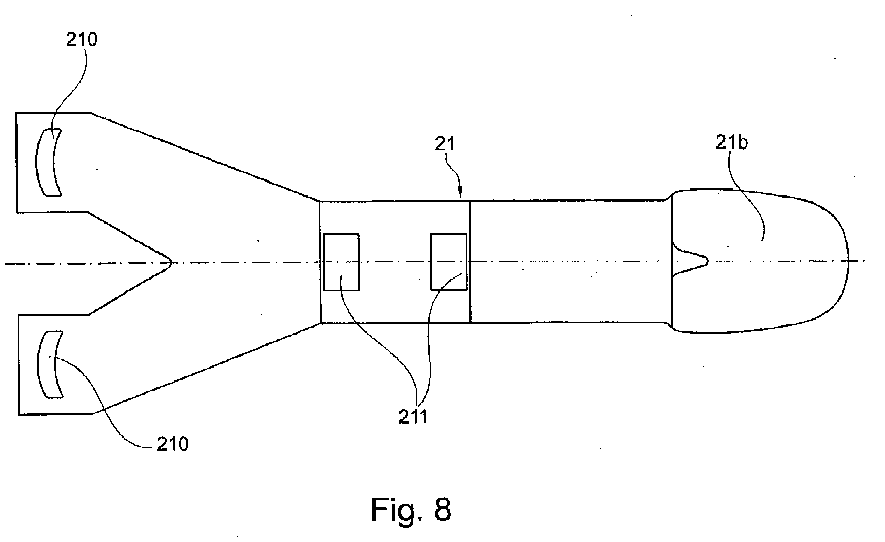

Figure 8 shows a schematic top view of an alternative embodiment of a support structure, in particular with reference to the figure portions 6 of sitting.

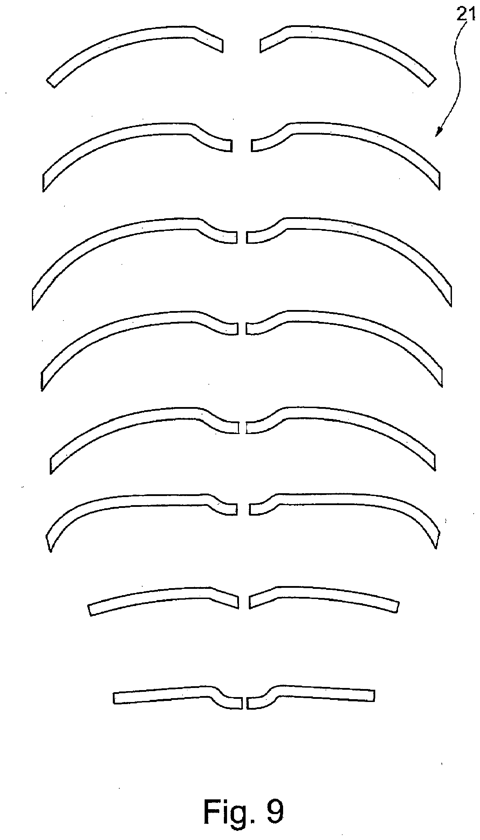

Figure 9 shows in sequence some profiles 21 of the seat unit (with some parts not shown for clarity): it shows how to determine the seating comfort can freely determine the type of the hull profile, regardless of the amount of padding (not shown in the figure), also obtaining the profiles from individual to pressure marking.

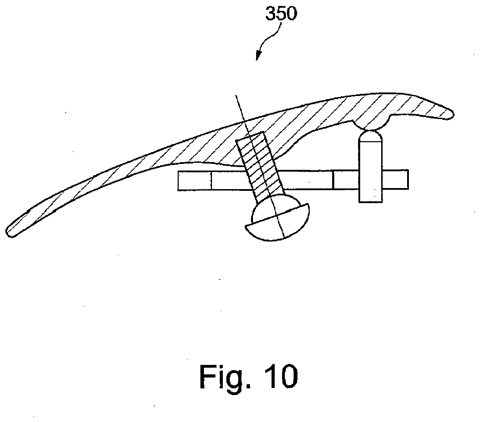

Figure 10 shows a further possible adjustment of which a group session according to the present invention is provided: in this way one can determine the planar configuration of the portions of the seat. More modes may be provided to achieve this effect: the log block, log block with stop wedges, log block and log wheat.

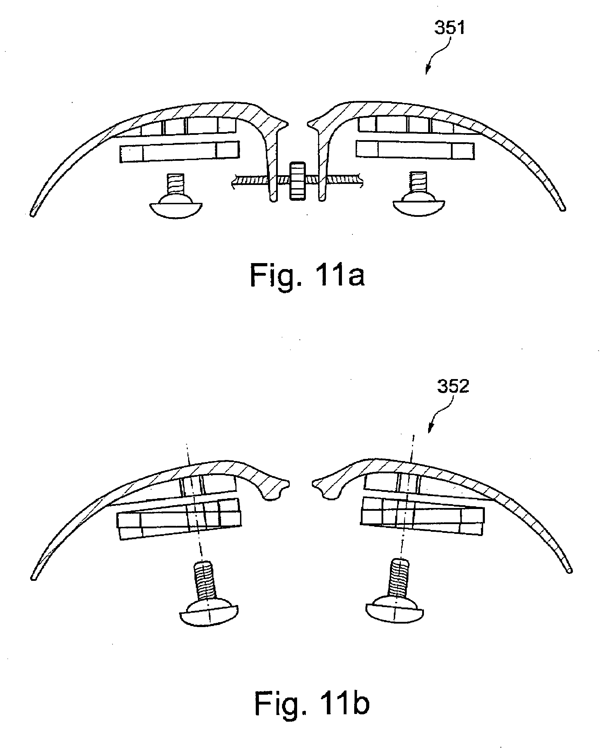

Figure 11a shows a further embodiment of the seat group in which the dowels are present which allow the lateral inclination of the portions of the seat. In Figure 11b there is an adjusting screw to determine during installation of the assembly on the bike the opening of the two portions of the seat. In this example, they are not shown for simplicity neither the fixing of the register on the supporting structure, since in an embodiment of the latter may be removable, or the bearing structure itself.

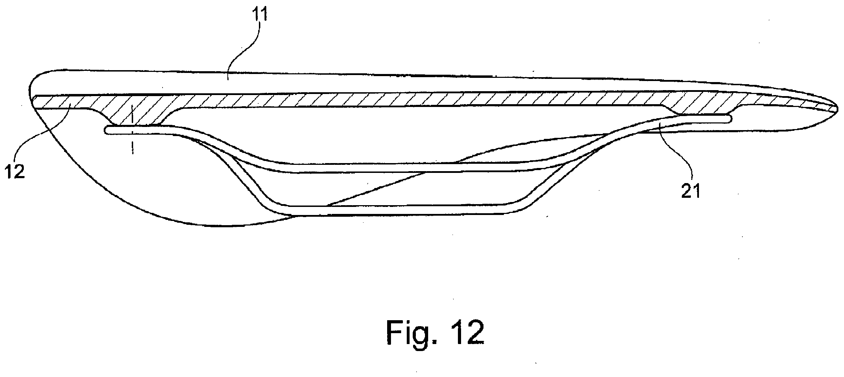

Figure 12 shows an embodiment of a group of session according to the present invention devised for the type "standard seat post tubes" and not dedicated, the seat assembly is in practice configured to mate with a traditional rail.

The present invention also relates to a bicycle characterized in that it comprises a session group described above.

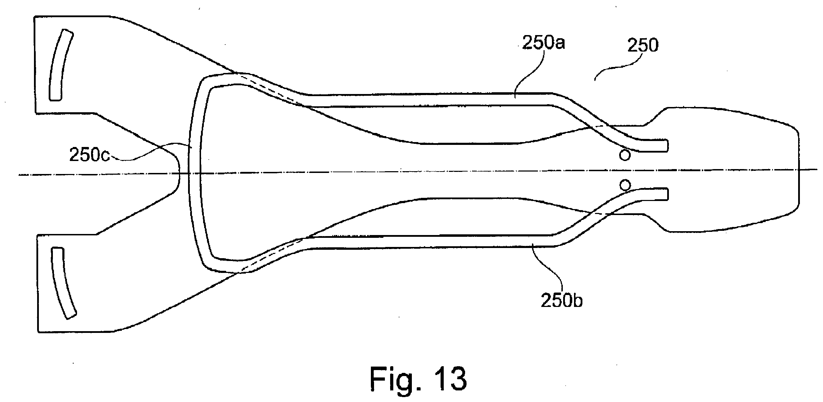

Figure 13 shows an embodiment of a group of session according to the present invention. It is in particular note the frame 21 of the integral seat group to a suitable rail 250 to be fixed to a seat tube of a known type. It should be noted that the known fastening between seat tube and rail typically takes place by means of a clamp which makes it integral with the rail to the head portion of the saddle post. A rail as is known comprises a first tubular portion and a second tubular portion between their mirror that develop in the direction of longitudinal extension of a saddle. In this way you can adjust the retraction and advancement of the saddle. As shown in Figure 13, the rail 250 comprises a first tubular portion 250a a second tubular portion 250b between their simmettriche and specular and a connecting portion 250c which connects the the first tubular portion 250a and the second tubular portion 250b. The connecting portion 250c is formed at the rear portion of the frame 21, where a greater structural rigidity is required, that the connecting portion 250c confers. The first tubular portion 250a the second tubular portion 250b have a longitudinal extension designed to enable the retraction adjustment and progress of the group session according to the present invention.

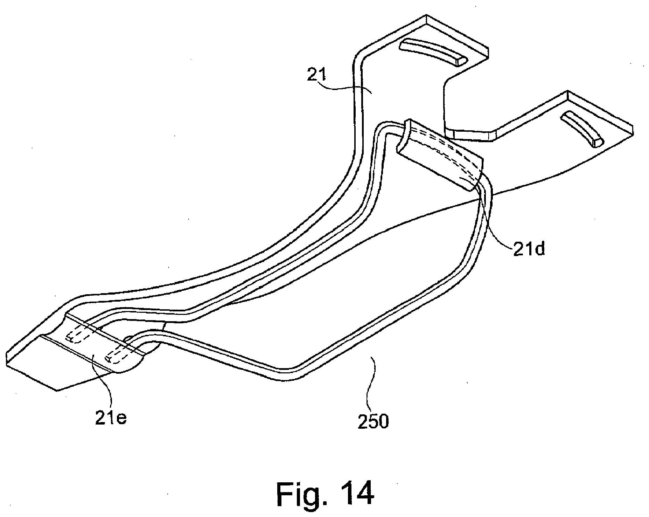

With reference to Figure 14, there is a perspective view of a frame 21 provided with a rail 250 suitable to be fixed to a seat tube of a known type. We note the rail 250 fixed to a frame 21. The two tubular portions 250 a and 250b receive, in use, a known type of clamp (not shown) to secure the seat unit to the saddle post of a cycle (both not shown in the figure). The rail 250 is fixed to the frame 21 of the seat assembly according to the present invention in various modes agreement. A first mode includes a special seat 21d at the rear portion of the frame 21 dedicated to the fitting portion 250c. A second seat 21 e in correspondence of the front portion receives the two ends of the tubular portions 250a and 250b.

## Claims

1. Seating assembly for a bike comprising:
- a saddle (10) in turn comprising a first seating portion (11a) and a second seating portion (11b);
- a link module (30) comprising a fixing portion to make said module integral with to the frame of said bicycle and a supporting portion configured to support said saddle;
- an link interface (20) to fix said saddle to said supporting portion,
wherein said first seating portion (11a) and a said seating portion (11b) are selectively fixable to said link interface (20) to determine, in turn on the basis of the chosen fixing, the seating surface that said saddle (10) offers to a user.

2. Assembly according to claim 1 wherein said module comprises:
- a first extremity portion adapted to be fix to said bike frame;
- a second extremity portion, opposite to the first, configured to receive said saddle (10);
- a tubular junction portion between said first and second extremity portions.

3. Assembly according to claim 1 or 2 wherein said link interface (20) of said saddle (10) comprises a link frame (21) adapted to fix to said supporting portion and to receive said first seating portion (11a) and said second seating portion (11b).

4. Assembly according to claim 1 or 2 wherein said link interface (20) of said saddle 10) comprises a standard link element (250) adapted to be fixed to said supporting portion.

5. Assembly according to claim 3 wherein said link interface (20) further comprises a sliding element (22) interposed between said link frame (21) and said link module (30).

6. Assembly according to claim 3 wherein said link frame (21) comprises a plurality of buttonholes (210, 211) to fix said first seating portion (11a) and said second seating portion (11b) according to a plurality of configurations.

7. Assembly according to any of the claims from 1 to 3 and from 5 to 6 wherein said sliding element comprises a plurality of buttonholes to fix said link frame (21) according to a plurality of planar configurations.

8. Assembly according to any of the preceding claims wherein said saddle (10) comprises a padding portion (11) and a hull portion (12).

9. Bicycle **characterized by** the fact of comprising a seating assembly according to any of the claims from 1 to 8.
